# EUROPÄISCHE PATENTANMELDUNG

(11) **EP 4 105 476 A1**
(43) Veröffentlichungstag der Anmeldung: **21.12.2022**
(21) Anmeldenummer: 22179237.7
(22) Anmeldetag: 15.06.2022
(51) Int. Cl.: F03D 1/02, F03D 13/20

(54) **STROMERZEUGUNGS-SYSTEM**

(30) Priorität: 15.06.2021 CH 6932021
(71) Anmelder: Vetsch, Henrik, 7235 Fideris (CH)
(72) Erfinder: Vetsch, Henrik, 7235 Fideris (CH)
(74) Vertreter: Riederer Hasler & Partner Patentanwälte AG

(57) **Zusammenfassung**

Die Erfindung betrifft ein Stromerzeugungs-System (11) umfassend einen Tunnel (13), welcher unterhalb eines Bergkammes (17) einen Berg (19) durchsticht und einen Eingang (21) und einen Ausgang (23) aufweist und wenigstens eine von in dem Tunnel (13) angeordnete Windkraftanlage (15). An dem Eingang (21) und dem Ausgang (23) ist eine Mehrzahl von Leitelementen (25) vorgesehen.

## Beschreibung

### Gebiet der Erfindung

Die Erfindung betrifft ein Stromerzeugungs-System gemäss Oberbegriff des Anspruchs 1.

### Stand der Technik

Aus dem Stand der Technik auf dem Gebiet der Nutzung von Windenergie zur Erzeugung von elektrischem Strom sind sehr grosse Windkraftanlagen (WKA) mit Blattlängen von bis zu 65 m bekannt. Diese beinträchtigen das Landschaftsbild beträchtlich. Auch werden solche WKA vorwiegend in für LKW erschlossenen Räumen installiert. Bereiche von hohen Berggipfeln mit erschwerten Erschliessungsmöglichkeiten und engen Platzverhältnissen schliessen solche Projekte aus Kostengründen oftmals aus.

Um die starken Winde in der Nähe von Bergkämmen und Bergspitzen zu nutzen sind Tunnelanlagen bekannt, durch welche Wind strömen kann. In dem Tunnel können mehrere WKAs angeordnet sein, welche von dem durchströmenden Wind angetrieben werden. Diese Tunnel nutzen den Wind jedoch nur gering, weil dieser mehr oder weniger zufällig durch den Tunnel bläst.

Um die Effizienz der Tunnelanlagen zu steigern, wird die Höhe eines Berges zum Einbauen eines Kamins genutzt. Die elektrische Energie wird mittels Nutzung der Druckdifferenz der Umgebungsluft im Bereich der im Tal angeordneten Kaminöffnung verglichen mit jener im Bereich der Bergspitze erzeugt. Tunnelanalgen, welche den Kamineffekt nutzen, werden beispielsweise in der CN 102003346 A, in der CN 201301779 Y oder in der FR 2658566 A1 beschrieben.

### Aufgabe der Erfindung

Aus den Nachteilen des beschriebenen Stands der Technik resultiert die Aufgabe einen Tunnel mit integrierter WKA zu zeigen, welcher möglichst unauffällig im Landschaftsbild in Erscheinung tritt und bei welchem der Wirkungsgrad der Stromerzeugung verbessert ist, indem die vorherrschenden Gebirgswinde optimal genutzt werden.

### Beschreibung

Die Lösung der gestellten Aufgabe gelingt bei einem Stromerzeugungs-System durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Die Erfindung zeichnet sich bevorzugt dadurch aus, dass der Tunnel im Wesentlichen horizontal orientiert ist und dass an dem Eingang und dem Ausgang eine Mehrzahl von Leitelementen vorgesehen ist. Die beiden Tunnelöffnungen befinden sich bei dem vorliegenden System im Wesentlichen auf gleicher Meereshöhe, womit keine Luftdruckdifferenz in Folge einer unterschiedlichen Meereshöhe zur Stromproduktion genutzt werden kann. Vielmehr werden die meistens horizontal gerichtet vorliegenden Winde zur Energiegewinnung genutzt. Die Leitelemente ermöglichen es, dass Wind, Sturm und Thermik in den Tunnel kanalisiert werden können, wodurch die Ausbeute der Stromerzeugung erheblich verbessert werden kann. Beim vorliegenden System haben die Leitelemente bzw. die luftleitenden Elemente (Eingangs- und Ausgangs) die Funktion einer Umlenkung der Luftströme, um maximale Luftgeschwindigkeiten im Tunnel erzeugen zu können. Eine Regulierung der Windgeschwindigkeiten zwecks Beeinflussung der Stromleistung oder zum Schutze der Windkraftanlagen wird im Gegensatz zu den Systemen des Stands der Technik bewusst verhindert. Somit handelt es sich im Vergleich mit bekannten Systemen um ein System, welches unterschiedliche physikalische Phänomene nutzt und einer komplett anderen regeltechnischen Zielsetzung unterliegen. Im Rahmen dieser Anmeldung sollen bei einem im Wesentlichen horizontal orientierten Tunnel Gefälleabweichungen von der Horizontalen von bis zu 4% miterfasst sein.

In einer bevorzugten Ausführungsform der Erfindung sind die Leitelemente ein erstes und zweites Deckenelement, welche entlang der Tunneldecke in Tunnelrichtung verschiebbar sind. Insbesondere für Thermik, also aufsteigende Winde, sind diese Deckenelemente äusserst nützlich, um den Wind in den Tunnel einzuleiten. Durch die Verschiebbarkeit ist es möglich, das Mass der Windumlenkung an die Windgeschwindigkeit bzw. an die Stärke der Thermik anzupassen.

In einer weiteren bevorzugten Ausführungsform der Erfindung sind die Leitelemente ein erstes und ein zweites Tor, welche sich in unterschiedlichen Winkeln zu dem Eingang bzw. Ausgang feststellen lassen. Dadurch ist es einerseits möglich die Einleitung des Windes in den Tunnel individuell an die momentan vorherrschende Windrichtung und - stärke anzupassen. Andererseits lässt sich der Tunnel bei Bedarf auch durch die Tore verschliessen. Denkbar ist es auch, dass sich die Tore automatisch mit der Windrichtung mitbewegen, um zu jederzeit einen optimalen Anstellwinkel relativ zum Wind zu besitzen.

Als zweckdienlich hat es sich erwiesen, wenn das erste Tor einen ersten und zweiten Flügel aufweist. Dadurch lässt sich der Wind noch präziser in den Tunnel einleiten, da der erste und zweite Torflügel unterschiedliche Öffnungswinkel einnehmen können.

Zweckmässigerweise weist das zweite Tor einen dritten und vierten Flügel auf. Dadurch lässt sich der aus dem Tunnel am Ausgang austretende Wind ohne Abriss ausleiten, wodurch die Windgeschwindigkeit im Tunnel optimiert werden kann. Es versteht sich, dass der Ausgang zum Eingang werden kann, falls sich die Windrichtung markant um 180 Grad dreht.

In einer weiteren bevorzugten Ausführungsform der Erfindung ist an der Unterseite der Deckenelemente jeweils ein drittes bzw. ein viertes Deckenelement quer zur Tunnelrichtung verschiebbar angeordnet. Das dritte und vierte Deckenelement lassen sich ausfahren und können die Freiräume zwischen den Torflügeln und dem ersten bzw. zweiten Deckenelement verschliessen. Dadurch kann noch mehr vertikal aufsteigender Wind in den Tunnel umgeleitet werden.

Als vorteilhaft kann es sich erweisen, wenn die Leitelemente durch aus Textilien hergestellte Segel realisiert sind. Die Segel können ein- und ausgefahren, beispielsweise einund ausgerollt werden nach der Art der Segel bei einem Segelboot. Die Segel sind kostengünstig und lassen sich bei Schäden durch Wind rasch austauschen.

Die Erfindung zeichnet sich auch bevorzugt dadurch aus, dass die Leitelemente über Aktuatoren bewegbar sind. Durch die Aktuatoren lassen sich die Leitelemente fernsteuern und auch stufenlos und automatisch an Änderungen der Windrichtung anpassen.

In einer weiteren besonders bevorzugten Ausführungsform der Erfindung sind die Leitelemente am Eingang derart ausgeformt und angeordnet sind, dass sie zusammen als Düse wirken und dass die Leitelemente am Ausgang derart ausgeformt und angeordnet sind, dass sie zusammen als Diffusor wirken. Um den Energieertrag zu maximieren sind die Leitelemente so konstruiert, dass sie den Eintrittsquerschnitt im Verhältnis zum Tunnelquerschnitt vergrössern und dadurch die Zuführung der Luftmassen konzentrieren (Düsenwirkung). Durch diese Düse werden die Strömungsgeschwindigkeiten und damit der Energieertrag der Windkraftanlage weiter erhöht. Die ausströmenden Luftmassen werden über durch Leitelemente realisierte Querschnittserweiterung (Diffusorwirkung) entsprechend in die Strömungsrichtung umgelenkt und weggeführt. Durch diesen Diffusor wird es ermöglicht, die Luftmassen am Austritt so langsam wie möglich zu führen und dadurch eine möglichst hohe Geschwindigkeitsdifferenz zu den Windströmungen am Gelände zu erreichen und damit eine zusätzliche Sogwirkung zu erzeugen.

Von Vorteil ist es, wenn die Windkraftanlage einer ersten Art eine Horizontalachse mit daran befestigten und sich in einer Vertikalebene drehenden ersten Rotorblättern aufweist und die Windkraftanlage einer zweiten Art eine Vertikalachse mit daran befestigten zweiten Rotorblättern aufweist, welche in einem vertikalorientierten und zylinderförmigen Raum liegen. Dadurch lassen sich unterschiedliche Strömungsverhältnisse in dem Tunnel ausnutzen.

Als vorteilhaft erweist es sich, wenn in dem Tunnel ausfahrbare Windumlenkklappen zur Leistungssteigerung der Windkraftanlagen zweiter Art angeordnet sind. Bevorzugt ist es, dass vor und hinter einer Windkraftanlage jeweils eine Windumlenkklappe an der Tunnelwand angeordnet ist. Dadurch werden in Windrichtung gesehen nur die linken oder die rechten Rotorblätter angeströmt. Die sich in Gegenwindrichtung bewegenden Rotorblätter werden daher nicht angeströmt, wodurch der Energieeintrag der WKA maximiert wird. Die Windklappen können je nach Windstärke stufenlos aus- oder eingeklappt werden.

In einer weiteren bevorzugten Ausführungsform der Erfindung ist der Tunnel in der vorliegenden Hauptwindrichtung orientiert. Dadurch ist eine maximale Wind-Durchströmung des Tunnels sichergestellt. Da die Baukosten des Tunnels mit seiner Länge steigen, ist es bevorzugt, wenn der Bergkamm sich quer zur Hauptwindrichtung erstreckt. Dadurch kann der Berg unterhalb des Bergkammes auf kürzestem Weg von dem Tunnel durchstochen werden und es kann ein Maximum an Wind in den Tunnel geleitet werden. Weicht die Orientierung des Bergkammes von der Richtung quer zu Hauptwindrichtung ab (der Bergrücken ist quasi mehr «in den Wind gedreht»), so kann der Tunnel den Berg nicht mehr auf kürzestem Weg durchstechen und die Errichtungskosten des Tunnels steigen. Das heisst, es muss in einer Kosten-Nutzen-Rechnung abhängig von den herrschenden Windstärken und Richtungen entschieden werden, bis zu welcher Länge des Tunnels sich dessen Errichtung noch rechnet.

Als vorteilhaft hat es sich erwiesen, wenn die Sohle des Tunnels ein Gefälle zwischen 1% und 4% und bevorzugt zwischen 2% und 3%. aufweist. Dadurch kann Wasser, welches aus dem Berg versickert oder Regenwasser, welches in den Tunnel geblasen wird, aus dem Tunnel von selbst abfliessen.

In einer weiteren bevorzugten Ausführungsform des Tunnels ist der Tunnel zwischen 10 und 25 m und bevorzugt zwischen 15 und 20 m unterhalb des Bergkammes angeordnet. Dadurch können die Winde, welche in der Nähe des Bergkammes üblicherweise am stärksten sind, optimal genutzt werden. Falls es sich um eine relativ dünne Felswand handelt, kann es aus Gründen der Stabilität sinnvoll sein, wenn der Abstand des Tunnels zum Bergkamm grösser als 20 m ist.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: einen Querschnitt durch einen Berggipfel mit einem durchgestochenen Tunnel;
- Figur 2:: eine Detailansicht des Tunnels mit innerhalb des Tunnels angeordneten Windkraftanlagen;
- Figur 3:: einen Grundriss eines Tunnelausschnitts mit einer WKA als Vertikalachser und
- Figur 4:: eine Detailansicht eines Tunnelportals.

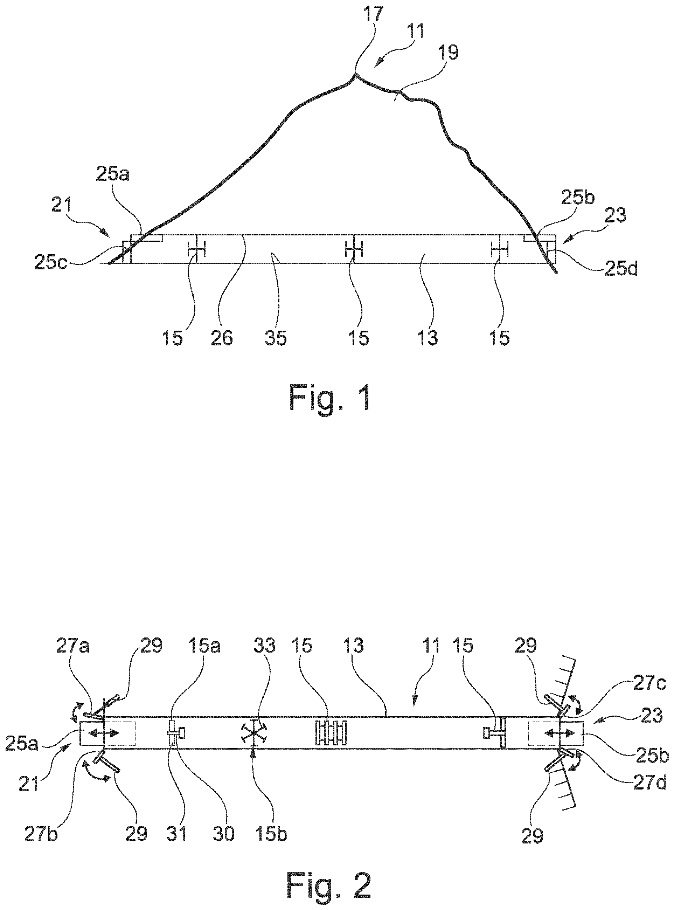

In den Figuren 1 und 2 ist ein Stromerzeugungs-System gezeigt, welches gesamthaft mit dem Bezugszeichen 11 bezeichnet ist. Das System umfasst einen Tunnel 13 und wenigstens eine in dem Tunnel angeordnete Windkraftanlage (WKA) 15. Der Tunnel durchsticht unterhalb des Bergkammes 17 eines Berges 19 ebendiesen. Der Tunnel weist einen Eingang 21 und einen Ausgang 23 auf. Bevorzugt ist der Tunnel 13 in der für den Bergkamm 17 bekannten Hauptwindrichtung orientiert, um eine Winddurchströmung des Tunnel 13 sicher zu stellen. Dementsprechend tritt der Wind am Eingang 21 ein und tritt am Ausgang 23 des Tunnels aus. Es versteht sich, dass bei einer Veränderung der Windrichtung der Ausgang zum Eingang werden kann und vice versa.

An dem Eingang 21 und dem Ausgang 23 sind eine Mehrzahl von Leitelementen 25 vorgesehen, welche den Wind am Eingang 21 in den Tunnel 13 leiten bzw. die Ausströmgeschwindigkeit des Windes am Ausgang erhöhen. Zweiteres kann dadurch erfolgen, dass die Leitelemente 25 die Verwirbelung am Ausgang 23 vermindern.

Die Leitelemente 25 können ein erstes und zweites Deckenelement 25a,25b sein, welche entlang der Tunneldecke 26 horizontal verschiebbar sind. Dadurch kann der nach oben strömende Wind in den Tunnel 13 umgelenkt werden. Dazu zählen insbesondere die im alpinen Bereich auftretende Thermik, welche im Tagesverlauf zunimmt.

Die Leitelemente 25 können auch ein erstes und zweites Tor 25c,25d sein. Die Tore 25c,25d können einen ersten und zweiten Torflügel 27a,27b bzw. einen dritten und vierten Torflügel 27c,27d aufweisen. Die Torflügel 27a,27b,27c und 27d lassen sich in unterschiedlichen Winkeln zu dem Eingang 21 bzw. dem Ausgang 23 feststellen. Dadurch können die Öffnungswinkel je nach Einfallwinkel des Windes angepasst werden, um möglichst viel Wind in den Tunnel 13 zu leiten. Die vier Torflügel haben den Vorteil, dass jeder von diesen einen unterschiedlichen Öffnungswinkel haben kann, um die Windumleitung in den Tunnel 13 optimieren zu können. Die Leitelemente 25 können über Aktuatoren 29 bewegt und festgestellt werden. Dadurch lassen sich die Leitelemente 25 in einfacher Weise fernsteuern. Die Aktuatoren 29 können elektrisch oder pneumatisch betrieben werden. Die Leitelemente 25 können durch die Aktuatoren 29 automatisch auf Änderungen der Windrichtung reagieren und sind dadurch immer optimal zur Windrichtung eingestellt. Sollen der Tunnel 13 bzw. die WKA 15 vor widrigen Wetterverhältnissen geschützt werden, so lassen sich die Tore 25c,25d einfach schliessen.

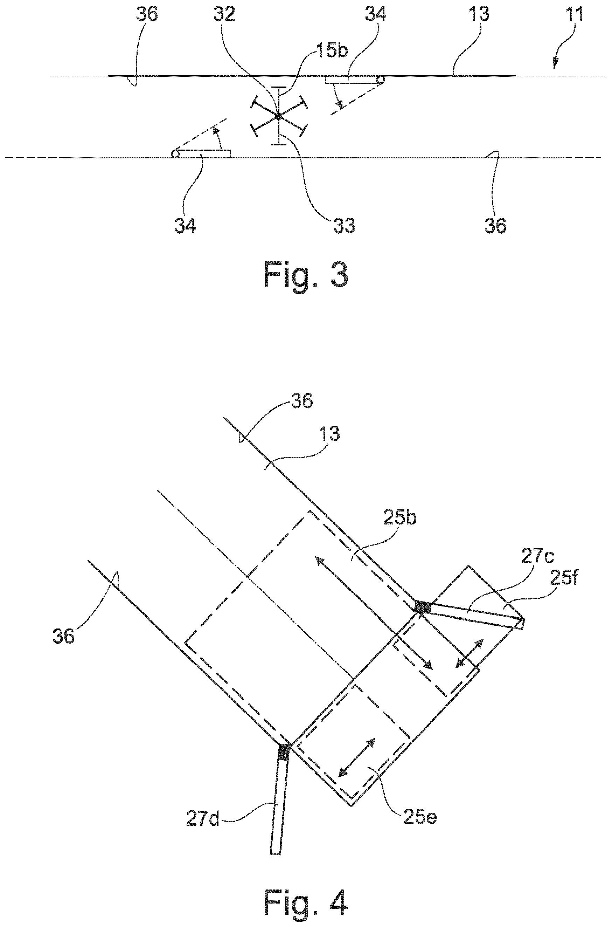

In der Figur 4 ist gezeigt, dass an den in Tunnelachsrichtung verschiebbaren Deckenelementen 25a,25b unterseitig jeweils seitlich (quer zur Tunnelachse) ein verschiebbares drittes und viertes Deckenelement 25e,25f angeordnet ist. Das dritte und vierte Deckenelement 25e,25f verschliessen die Lücken zwischen den Torflügeln 27a,27b,27c,27d und dem ersten bzw. dem zweiten Deckenelement 25a,25b. Dadurch wird der vertikal wehende Wind verstärkt in den Tunnel 13 eingeleitet, da die Lücken durch das dritte und vierte Deckenelement 25e,25f geschlossen sind.

Die WKA 15 können nach einer ersten oder zweiten Art ausgeführt sein. Die erste Art besitzt an einer Horizontalachse 30 befestigte erste Rotorblätter 31, welche sich in einer Vertikalebene bewegen. Die zweite Art besitzt zweite Rotorblätter 33, welche sich innerhalb eines vertikal stehenden Zylinderraums und befestigt an einer Vertikalachse 32 bewegen. Die WKA 15 erster und zweiter Art können in dem Tunnel 13 kombiniert werden, um eine optimale Energieausbeute aus dem durch den Tunnel strömenden Wind zu erhalten.

In Figur 3 ist eine WKA 15b der zweiten Art in einem Grundriss des Tunnels 13 gezeigt. Zu beiden Seiten der WKA 15b können ausfahrbare Windumlenkklappen 34 in dem Tunnel 13 an dessen Wänden 36 angeordnet sein, welche in Abhängigkeit von der in dem Tunnel herrschenden Windstärke mehr oder weniger ausfahrbar sind. Dadurch kann die Leistung der WKA 15b gesteigert werden. Die Windumlenkklappen 34 verhindern, dass die Rotorblätter 33, welche sich in Gegenwindrichtung bewegen, vom Wind angeströmt werden. Dadurch wird die Rotationsgeschwindigkeit der zweiten Rotorblätter nicht gebremst, sondern vielmehr maximiert. Zudem wird der Wind durch die Windumlenkklappen 34 vollständig auf die sich in Windrichtung drehenden Rotorblätter 34 kanalisiert.

Zweckmässigerweise besitzt der Tunnel bzw. dessen Sohle 35 ein Gefälle vom Eingang zum Ausgang zwischen 1% und 4% und bevorzugt zwischen 2% und 3%. Der Tunnel 13 ist zwischen 10 und 25 m und bevorzugt zwischen 15 und 20 m unterhalb des Bergkammes angeordnet. Dadurch ist sichergestellt, dass der Tunnel eine vernünftige Länge besitzt und dessen Herstellung nicht zu teuer ist. Zudem herrschen in diesen Höhen die höchsten Windgeschwindigkeiten.

Das Stromerzeugungs-System 11 ist nahezu unsichtbar und dementsprechend landschaftsschonend. Es kann die starken Winde und die Thermik in der Nähe von Bergkämmen nutzen. Zudem lässt sich durch die Leitelemente 25 ein Maximum an Wind in den Tunnel 13 einleiten.

### Legende:

- 11: Stromerzeugungs-System
- 13: Tunnel
- 15, 15a,15b: Windkraftanlage, erste Art, zweite Art
- 17: Bergkamm
- 19: Berg
- 21: Eingang
- 23: Ausgang
- 25: Leitelemente
- 25a,25b: Erstes und zweites Deckenelement
- 25c,25d: Erstes und zweites Tor
- 25e,25f: Drittes und viertes Deckenelement
- 26: Tunneldecke
- 27a,27b,27c,27d: Erster, zweiter, dritter und vierter Torflügel
- 29: Aktuatoren
- 30: Horizontalachse
- 31: Erste Rotorblätter
- 32: Vertikalachse
- 33: Zweite Rotorblätter
- 34: Windumlenkklappen
- 35: Sohle des Tunnels
- 36: Tunnelwände

## Patentansprüche

1. Stromerzeugungs-System (11) umfassend
- einen Tunnel (13), welcher unterhalb eines Bergkammes (17) einen Berg (19) durchsticht und einen Eingang (21) und einen Ausgang (23) aufweist und
- wenigstens eine von in dem Tunnel (13) angeordnete Windkraftanlage (15), **dadurch gekennzeichnet,**
**dass** der Tunnel (13) im Wesentlichen horizontal orientiert ist und
**dass** an dem Eingang (21) und dem Ausgang (23) eine Mehrzahl von Leitelementen (25) vorgesehen ist.

2. System nach Anspruch 1, **dadurch gekennzeichnet, dass** die Leitelemente (25) ein erstes und zweites Deckenelement (25a,25b) sind, welche entlang der Tunneldecke (26) in Tunnelrichtung verschiebbar sind.

3. System nach Anspruch 1 oder 2, **dadurch gekennzeichnet, dass** die Leitelemente (25) ein erstes und ein zweites Tor (25c,25d) sind, welche sich in unterschiedlichen Winkeln zu dem Eingang (21) bzw. Ausgang (23) feststellen lassen.

4. System nach Anspruch 3, **dadurch gekennzeichnet, dass** das erste Tor (25c) einen ersten und zweiten Flügel (27a,27b) aufweist.

5. System nach Anspruch 3 oder 4, **dadurch gekennzeichnet, dass** das zweite Tor (25d) einen dritten und vierten Flügel (27c,27d) aufweist.

6. System nach einem der Ansprüche 2 bis 5, **dadurch gekennzeichnet, dass** an der Unterseite der Deckenelemente (25a,25b) jeweils ein drittes bzw. ein viertes Deckenelement (25e,25f) quer zur Tunnelrichtung verschiebbar angeordnet ist.

7. System nach Anspruch 1, **dadurch gekennzeichnet, dass** die Leitelemente (25) durch aus Textilien hergestellte Segel realisiert sind.

8. System nach einem der vorangehenden Ansprüche, **dadurch gekennzeichnet, dass** die Leitelemente (25) über Aktuatoren (29) bewegbar sind.

9. System nach einem der vorangehenden Ansprüche, **dadurch gekennzeichnet, dass** die Leitelemente (25) am Eingang (21) derart ausgeformt und angeordnet sind, dass sie zusammen als Düse wirken und dass die Leitelemente (25) am Ausgang (23) derart ausgeformt und angeordnet sind, dass sie zusammen als Diffusor wirken.

10. System nach einem der vorangehenden Ansprüche, **dadurch gekennzeichnet, dass** die Windkraftanlage (15) einer ersten Art (15a) eine Horizontalachse (30) mit daran befestigten und sich in einer Vertikalebene drehenden ersten Rotorblättern (31) aufweist

11. System nach einem der vorangehenden Ansprüche, **dadurch gekennzeichnet, dass** die Windkraftanlage (15) einer zweiten Art (15b) eine Vertikalachse (32) mit daran befestigten zweiten Rotorblättern (33) aufweist, welche in einem vertikalorientierten und zylinderförmigen Raum liegen.

12. System nach Anspruch 10 oder 11, **dadurch gekennzeichnet, dass** in dem Tunnel (13) eine Mehrzahl von Windkraftanlagen erster und zweiter Art (15a, 15b) angeordnet sind.

13. System nach einem der vorangehenden Ansprüche, **dadurch gekennzeichnet, dass** in dem Tunnel (13) ausfahrbare Windumlenkklappen (34) zur Leistungssteigerung der Windkraftanlagen zweiter Art (15b) angeordnet sind.

14. System nach einem der vorangehenden Ansprüche, **dadurch gekennzeichnet, dass** der Tunnel (13) in der vorliegenden Hauptwindrichtung orientiert ist.

15. System nach einem der vorangehenden Ansprüche, **dadurch gekennzeichnet, dass** die Sohle des Tunnels (13) ein Gefälle zwischen 1% und 4% und bevorzugt zwischen 2% und 3%. aufweist.

16. System nach einem der vorangehenden Ansprüche, **dadurch gekennzeichnet, dass** der Tunnel (13) zwischen 10 und 25 m und bevorzugt zwischen 15 und 20 m unterhalb des Bergkammes (17) angeordnet ist.
